# EUROPEAN PATENT APPLICATION

(11) **EP 3 895 961 A1**
(43) Date of publication of application: **20.10.2021**
(21) Application number: 21167929.5
(22) Date of filing: 12.04.2021
(51) Int. Cl.: B62B 9/14

(54) **WEATHER PROTECTION SCREEN**

(30) Priority: 17.04.2020 GB 202005642; 22.01.2021 GB 202100869
(71) Applicant: Halim, Mohammed, London N19 3BT (GB); Mohsen, Marwa, London N19 3BT (GB)
(72) Inventor: Halim, Mohammed, London N19 3BT (GB); Mohsen, Marwa, London N19 3BT (GB)
(74) Representative: Sach, Greg Robert

(57) **Abstract**

A weather protection screen comprising a transparent flexible waterproof sheet (210), characterised in that the weather protection screen further comprises a rotatable shaft (200), and two coiling support members (100) fixed at their proximal ends to the rotatable shaft (200) proximate respective opposite ends of the rotatable shaft (200); wherein: the transparent flexible waterproof sheet (210) is mounted between the two coiling support members (100); and the coiling support members (100) and transparent flexible waterproof sheet (210) are movable between a stowed configuration and a deployed configuration, such that, when in the stowed configuration, the coiling support members (100) and the transparent flexible waterproof sheet (210) are wrapped around the rotatable shaft (200) in a wound arrangement, and when in the deployed configuration, the transparent flexible waterproof sheet (210) and at least the corresponding portions (130) of the coiling support members (100) are unwound and extended from the rotatable shaft (200), having a qualitatively opposite curvature to the wound arrangement of the stowed configuration.

## Description

The present invention relates to a retractable weather protection screen. In particular it relates to a retractable weather protection screen supported by a coiling support member. Even more particularly the invention relates to a retractable weather protection screen supported by a coiling support member for use with prams/buggies/mobility scooters and the like.

### Background of the Invention

Rain and storm protection for baby strollers is well known. The rain covers traditionally consist of joined plastic sheets adapted to fit on the stroller. As a form of rain and storm protection, they do the job well, and when new the plastic sheets are clear and the child's field of view is little affected.

However, during the lifetime of a traditional rain and storm protector for a baby stroller, the protector is repeatedly stored and deployed. Moving back and forth between stored and deployed positions, especially as the rain protector is often stored under the pram in a hastily crumpled manner, rapidly causes creases to form in the rain protector and as a result the clarity of the plastic sheets deteriorates. This means there is no longer clear vision through the sheet and the viewing experience for the child is greatly diminished. It is also more difficult for the individual pushing the stroller to check on the child.

Another disadvantage of traditional rain protectors is that they can be difficult to deploy quickly when caught out by sudden rain, as many protectors do not form an integral part of the stroller.

EP0913312 discloses a holder for a folded rain-cover, removably fastened to a baby's pram or stroller, comprising a removable spring-loaded roller. The roller can be attached to the rain-cover in order to roll it up when not in use. This makes it easier to put a rain cover away, but still involves a complex procedure including several detachable parts.

GB2358615 disclose a rain-cover for a pram deployable from a rolled-up configuration in a storage cylinder. This provides a convenient method of storage and deployment, but the rain-cover itself has no supporting structure, which may lead to creasing and jamming when it is being stowed.

It is an object of the current invention to provide a rain and storm protector which is easily transitioned between the stored and deployed position and does not damage the clear/transparent properties of the protector through standard use.

### Summary of the invention

A first aspect of the invention provides a weather protection screen comprising a transparent flexible waterproof sheet, characterised in that the weather protection screen further comprises a rotatable shaft, and two coiling support members fixed at their proximal ends to the rotatable shaft proximate respective opposite ends of the rotatable shaft; wherein: the transparent flexible waterproof sheet is mounted between the two coiling support members; and the coiling support members and transparent flexible waterproof sheet are movable between a stowed configuration and a deployed configuration, such that, when in the stowed configuration, the coiling support members and the transparent flexible waterproof sheet are wrapped around the rotatable shaft in a would arrangement, and when in the deployed configuration, the transparent flexible waterproof sheet and at least the corresponding portions of the coiling support members are unwound and extended from the rotatable shaft, having a qualitatively opposite curvature to the wound arrangement of the stowed configuration.

This arrangement provides a very convenient weather protection screen which is easy to stow and deploy, since no dismantling or folding is necessary. Instead, the transparent flexible waterproof sheet simply extends into position for use, retaining a suitable shape according to the curvature of the deployed coiling support members. Similarly, the transparent flexible waterproof sheet simply returns into a stowed configuration, being neatly rolled up around the rotatable shaft, maintaining a neat rollable configuration during the process thanks to the coiling support members. In this way, the transparent flexible waterproof sheet can be stowed and deployed many times without being damaged, and without losing transparency.

In some embodiments, the rotatable shaft comprises an elongate cylinder secured at each end to respective rotatable clutch mechanisms. This provides a deployment and stowing action similar to a conventional roller blind. Roller blinds are well known for repeatedly stowing and deploying a flexible sheet without creasing or damaging it.

In some such embodiments, at least one of the clutch mechanisms may be spring loaded and lockable in a deployed position, such that, when released from the locked state, the rotatable shaft is resiliently biased to the stowed configuration. In this way, stowing the weather protection screen is quick and easy.

In other such embodiments, at least one of the clutch mechanisms may be driven by an electric motor. In such embodiments, suitable control and power apparatus, such as a bi-directional drive switch and a battery, are provided. This allows for easy, one handed deployment and stowing of the weather screen, at the touch of a button.

In some embodiments, the rotatable shaft, coiling support members, and transparent flexible waterproof sheet may be housed in a casing comprising a slot through which the coiling support members and transparent flexible waterproof sheet are extendable when moving to the deployed configuration. Providing a casing is advantageous because it provides protection to the mechanism, preventing accidental interference with the rolled up screen, and preventing the ingress of water or other contaminants to the rotation mechanism.

In some such embodiments, the weather protection screen may further comprise two arms, attached at their proximal ends to the casing at respective opposite ends of the casing, and attached at their distal ends to the distal ends of respective coiling support members, each arm comprising respective first and second segments connected by respective pivot joints, such that, when the coiling support members and the transparent flexible waterproof sheet are in the stowed configuration, the first and second segments of each of the arms are pivoted together about their pivot joints, and when the coiling support members and the transparent flexible waterproof sheet are in the deployed configuration, the first and second segments of each of the arms are pivoted apart about their pivot joints. The arms support the deployment of the transparent flexible waterproof sheet by forcing it to define an arc about the pivot joints. This ensures that it does not pass through space within said arc, which may be occupied by a user.

In some embodiments including a casing, fastening means may be provided for mounting the weather protection screen. This means that the weather protection screen can be retrofitted to any device which may benefit from it, such as a conventional stroller or mobility scooter. The fixing means may be any conventional means, such as straps, hooks, and/or permanent magnets.

In some embodiments, the transparent flexible waterproof sheet may be made from plastics. This is common in the art of such sheets, and allows for inexpensive manufacture and resilient flexibility.

In some embodiments, the coiling support members may comprise drag chains. Drag chains are ideally suited to coiling when stowed, and providing stable extension with a qualitatively opposite curvature when deployed, for reasons that will be explained below.

In some embodiments, the coiling support members may comprise flat coiled springs.

A second aspect of the invention provides a stroller or pram for an infant characterised in that it comprises a weather protection screen according to the first aspect. Although some embodiments of the weather protection screen are retrofittable to many vehicles or other objects, it is also contemplated that the weather protection screen of the invention can be formed as an integral part of a vehicle or other object, including in particular strollers or prams for infants. This will add to the convenience of users.

A third aspect of the invention provides a mobility scooter characterised in that it comprises a weather protection screen according to the first aspect.

### Brief Description of the Drawings

The invention will be described in more detail, by way of example, with reference to the following drawings:
Figure 1 depicts the coiling support members and sheet of the invention;
Figure 2 depicts an embodiment of the invention;
Figure 3 depicts an embodiment of the invention in use;
Figure 4 depicts an embodiment of the invention in use;
Figure 5 depicts an embodiment of the invention in use;
Figures 6A-B depict a drag chain for use in an embodiment of the invention;
Figures 7A-B depict a link of a drag chain from a plurality of angles.

### Detailed Description

The invention comprises a deployable rain cover comprising a flexible sheet supported between two coiling support members. In some embodiments, the coiling support members may be flat coiled springs. In other embodiments, the coiling support members may be drag chains.

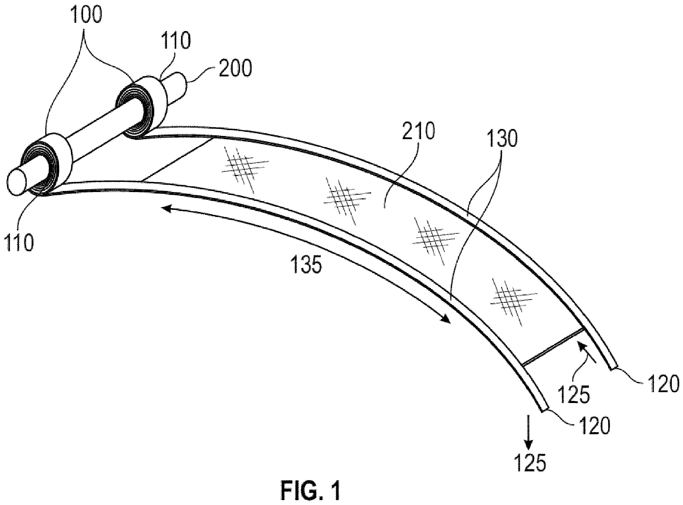

An embodiment using flat coiled springs will be described first. As depicted in Figure 1, there is a flat coil spring 100. The centre end of the spring 110 is held in a fixed position and as the distal end 120 is extended outward and a force 125 is applied, the extended body 130 of the flat coil spring 100 adopts an arch shape 135.

Two substantially identical flat coiled springs 100 are both at their centre ends 110 secured to a rotatable shaft 200. When the two flat coil springs 100 are extended and have a force 125 applied, they both produce substantially the same arch shapes. These arches can be used to support waterproof flexible sheet material mounted therebetween, for example clear plastic sheet 210. This arrangement can be used to provide a screen/shield/cover against adverse weather conditions such as rain and wind.

An embodiment using a drag chain will now be described.

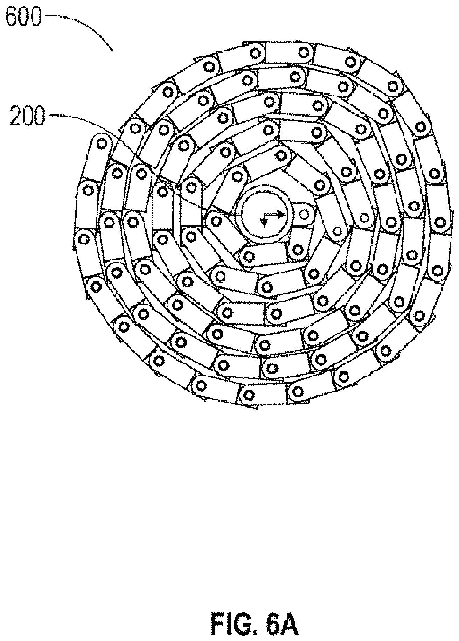

With reference to Figures 6A to 7B, there is shown the drag chain 600 having plurality of links 610 to be used with the invention. Drag chains are generally used for carrying the electrical cabling for 3D printers etc. The design of the drag chain 600, specifically the design of links 610 of the present invention, is such that in one direction it will roll up around a rotational shaft 200 (Figure 6A), but when unwound and made to bend in the other direction it produces an arch shape suitable for the canopy.

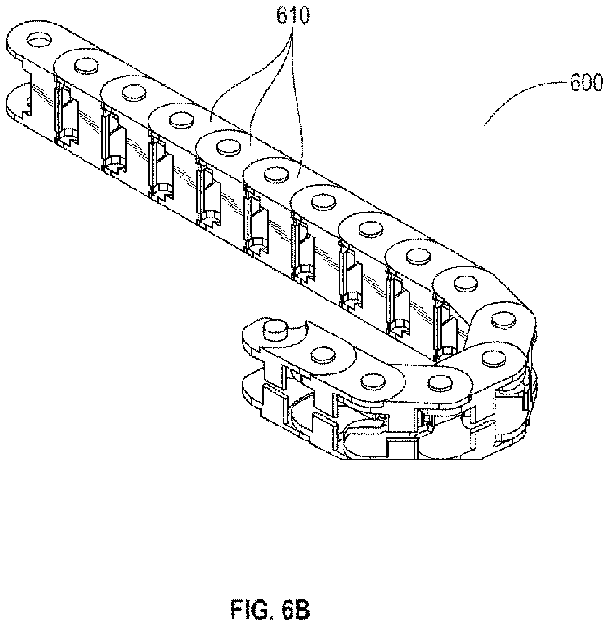

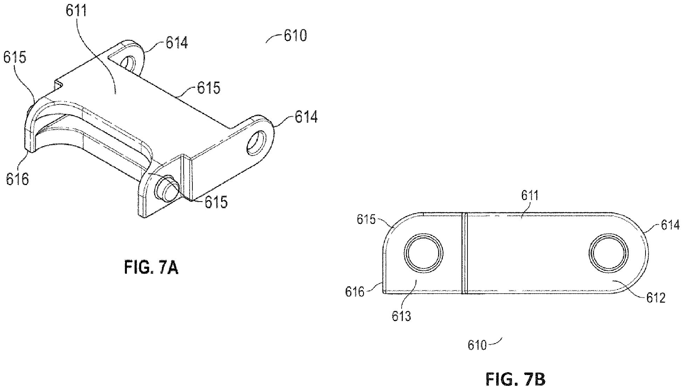

This is achieved via the specific shape of the drag chain links 610. As best seen in Figures 7A and 7B, the chain links 610 comprise a body 611, attachment arms 612 extending from one side of the body 611 and male complementary attachment protrusion 613 extending from the opposing side. In use, a plurality of links are connected end to end as seen in Figures 6A and 6B; in this embodiment male/female snap fit connection means are used, but any suitable known connection means can be used. Arms 612 have a rounded profile 614, and protrusion 613 has a partially rounded profile with curved corner 615 and sharp corner 616. The outer profile of body section 611 between arms 612 has a flat profile 617. When a plurality of links are connected together, protrusion 613 abuts flat surface 617 of a neighbouring link 610. Curved corner 615 allows the chain 600 to roll up in one direction, but in the other direction corner 616 abuts surface 617 and restricts movement of the chain. The curvature of the drag chain 600 when in the deployed position will be controlled by the tolerance and material deflection of the links 610; one available but non-limiting method of controlling the tolerance and material deflection of the drag chain can be seen in Figure 6B, where the drag chain links 610 are substantially hollow, for example having been 3D printed. Having a hollow drag chain may be advantageous for a number of reasons. For example, in an electrical embodiment such as a motor driven embodiment, a hollow drag chain may provide a convenient conduit for electrical cables. Also if a more specific curvature is desired, individual links 610 could have varied profiles 615, 616 and 617 to achieve a specific varied curvature.

The drag chain described above can be used instead of the flat coil spring described earlier, or in combination therewith. When used together the curvature of the canopy is supported and defined by the properties of both the flat coil spring and the drag chain, which may be adjacent, overlapping, or separated by a gap. In a preferred arrangement comprising a hollow drag chain such as the one depicted in Figure 6B, a flat coil spring is provided inside the drag chain. Throughout the description reference numeral 100 can be indicative of a flat coil spring, a drag chain, both used together, or another suitable coiling support member.

Rotatable shaft 200 can be a simple, pole-like structure, but would preferably be in the form of a roller-blind roller, to which the coiling support members 100 are attached. The roller 200 could be a simple pull/push-type roller mechanism, or it could be mechanically operated, using known spring mechanisms, or it could be driven by a battery-powered electrical motor (not shown).

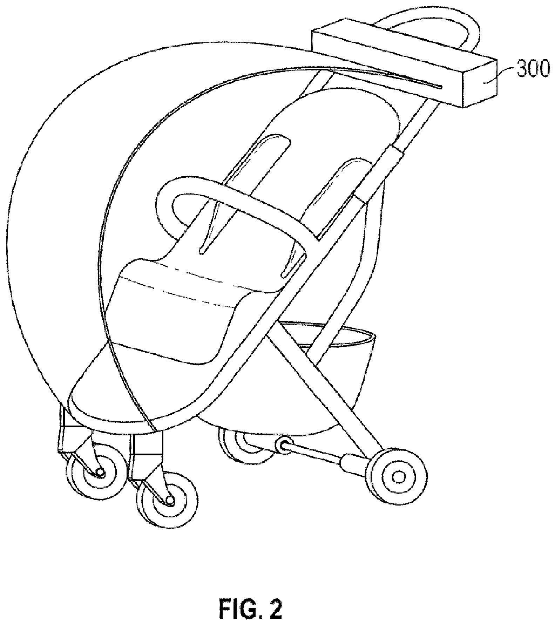

To protect the assembly itself from external damage, the assembly can be housed in a casing 300 as shown in Figure 2. The casing can be of any suitable design, but preferably an aesthetically pleasing design.

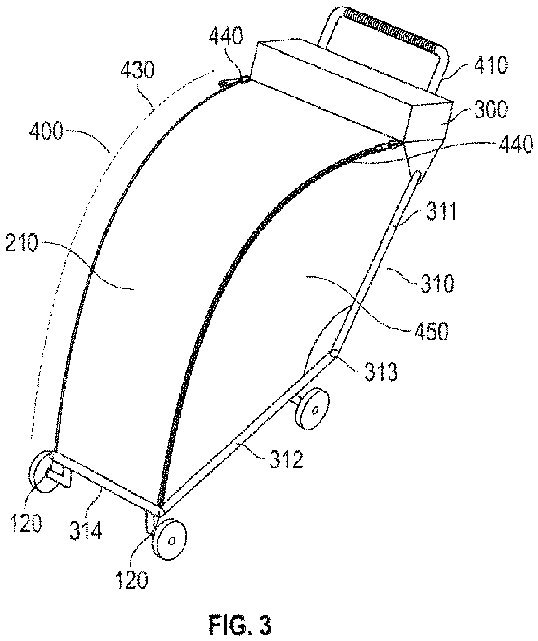

Figure 3 depicts an embodiment of the invention in use with a standard baby stroller 400. Casing 300, containing the roller 200, coiling support members 100 and waterproof clear sheet 210, is secured to the handles 410 of the stroller 400 via clamps (not shown) on the back of casing 300. Sheets 450 made from waterproof materials are attached to the sides of the weather screen to give the occupant complete protection from the elements.

Associated with casing 300 can be two hinged arms 310. Each hinged arm 310 splits into two sections 311, 312 connected by a pivot point 313. Sections 311 at one end are attached to the bottom and opposing sides of casing 300, extending away and substantially downward from the casing. At the end of section 311 distal to the casing 300 is located pivot 313 connecting section 311 to section 312.

Figure 3 shows the protective cover in a deployed state. The arm sections 312 at an end distal to hinge point 313 are connected to respective distal ends 120 of the coiling support members 100 and crossbar 314. As the protective cover extends, arm sections 312 move with the coiling support members and guide/force it along arcuate path 430, which is substantially the same as the natural arch shape 135 of the extended coiling support member when force 125 is applied. Once fully extended, arms 310 hold the coiling support member, and therefore the protective cover as a whole, in the deployed position.

The weather protection screen may also comprise fasteners 440 (for example zip fasteners) attached to and along the outer side edges of plastic sheet 210 and coiling support members 100, to which additional plastic screens 450 can be attached to provide protection from the elements from the side.

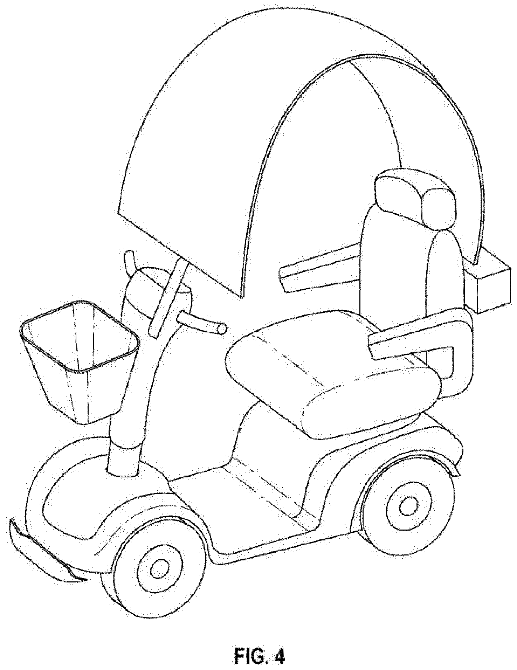

Although the embodiment described is for use with a baby stroller, the invention is not limited to this use. The weather protection screen could be used with a number of different devices that could benefit from protection from rain and storms known to the person skilled in the art. For example, the weather protection screen could be used on a mobility scooter as depicted in Figure 4, or trailer/truck awnings and canopies, awnings for homes, portable greenhouses, and carports.

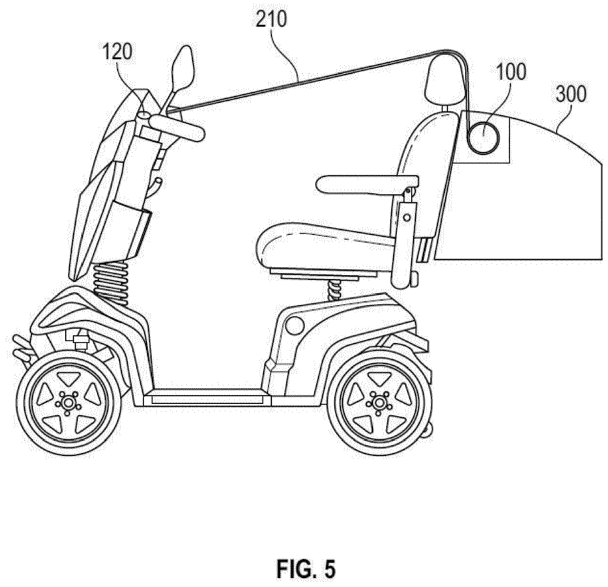

Figure 5 also depicts a mobility scooter using the weather protective screen of the current invention. In Figure 5 the scooter is not in use but is instead parked. The weather screen at the end proximal to distal ends 120 of the coiling support members 100 remains attached to the front steering column portion of the mobility scooter. The screen is then reeled in so that it provides a tight screen from the attachment points on the steering column to the casing 300 located behind the seat of the scooter. This tight screen first acts as a lock' to the steering and secondly also prevents anyone sitting on the seat, therefore making it impossible for someone to drive the scooter. Thirdly, the screen will help keep the seat dry while the scooter is, for example, parked outside.

The invention has been described with reference to a preferred embodiment. The description is intended to enable a skilled person to make the invention, not to limit the scope of the invention. The scope of the invention is determined by the claims.

## Claims

1. A weather protection screen comprising a transparent flexible waterproof sheet (210), **characterised in that** the weather protection screen further comprises a rotatable shaft (200), and two coiling support members (100) fixed at their proximal ends to the rotatable shaft (200) proximate respective opposite ends of the rotatable shaft (200); wherein: the transparent flexible waterproof sheet (210) is mounted between the two coiling support members (100); and the coiling support members (100) and transparent flexible waterproof sheet (210) are movable between a stowed configuration and a deployed configuration, such that, when in the stowed configuration, the coiling support members (100) and the transparent flexible waterproof sheet (210) are wrapped around the rotatable shaft (200) in a wound arrangement, and when in the deployed configuration, the transparent flexible waterproof sheet (210) and at least the corresponding portions (130) of the coiling support members (100) are unwound and extended from the rotatable shaft (200), having a qualitatively opposite curvature to the wound arrangement of the stowed configuration.

2. A weather protection screen according to claim 1 wherein the rotatable shaft (200) comprises an elongate cylinder secured at each end to respective rotatable clutch mechanisms.

3. A weather protection screen according to claim 2 wherein at least one of the clutch mechanisms are spring loaded and lockable in a deployed position, such that, when released from the locked state, the rotatable shaft (200) is resiliently biased to the stowed configuration.

4. A weather protection screen according to claim 2 wherein at least one of the clutch mechanisms is driven by an electric motor.

5. A weather protection screen according to any preceding claim wherein the rotatable shaft (200), coiling support members (100), and transparent flexible waterproof sheet (210) are housed in a casing (300) comprising a slot through which the coiling support members (100) and transparent flexible waterproof sheet (210) are extendable when moving to the deployed configuration.

6. A weather protection screen according to claim 5 further comprising two arms (310), attached at their proximal ends to the casing (300) at respective opposite ends of the casing (300), and attached at their distal ends to the distal ends (120) of respective coiling support members (100), each arm (310) comprising respective first (311) and second (312) segments connected by respective pivot joints (313), such that, when the coiling support members (100) and the transparent flexible waterproof sheet (210) are in the in the stowed configuration, the first (311) and second (312) segments of each of the arms (310) are pivoted together about their pivot joints (313), and when the coiling support members (100) and the transparent flexible waterproof sheet (210) are in the deployed configuration, the first (311) and second (312) segments of each of the arms(310) are pivoted apart about their pivot joints (313).

7. A weather protection screen according to claim 5 or claim 6, further comprising fastening means on the casing (300) for mounting the weather protection screen.

8. A weather protection screen according to any preceding claim wherein the transparent flexible waterproof sheet (210) is made from plastics.

9. A weather protection screen according to any preceding claim wherein the coiling support members (100) comprise drag chains (600).

10. A weather protection screen according to any preceding claim wherein the coiling support members (100) comprise flat coiled springs.

11. A stroller or pram for an infant **characterised in that** it comprises a weather protection screen according to any preceding claim.

12. A mobility scooter **characterised in that** it comprises a weather protection screen according to any one of claims 1 to 8.
